# EUROPÄISCHE PATENTSCHRIFT

(11) **EP 3 117 099 B1**
(45) Veröffentlichungstag und Bekanntmachung des Hinweises auf die Patenterteilung: **27.07.2022**
(21) Anmeldenummer: 15704297.9
(22) Anmeldetag: 11.02.2015
(51) Int. Cl.: F03D 15/00, F03D 80/50, F03D 13/10, F03D 9/25, F03D 80/70, H02K 1/30, H02K 7/18, H02K 15/00, H02K 7/00

(54) **MODULARE KOPPLUNG EINES WINDKRAFTGETRIEBES MIT EINEM GENERATOR**
MODULAR COUPLING OF A WIND TURBINE GEARBOX TO A GENERATOR
SYSTÈME DE COUPLAGE MODULAIRE D'UNE TRANSMISSION POUR ÉOLIENNES COMPRENANT UN GÉNÉRATEUR

(30) Priorität: 11.03.2014 DE 102014204479
(43) Veröffentlichungstag der Anmeldung: 18.01.2017
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, B-3040 Huldenberg (BE)
(74) Vertreter: ZF Friedrichshafen AG
(86) Internationale Anmeldenummer: PCT/EP2015/052820
(87) Internationale Veröffentlichungsnummer: WO 2015/135714

(56) Entgegenhaltungen:
- EP-B1- 0 811 764
- US-A1- 2007 075 548
- US-A1- 2010 133 854
- US-A1- 2010 329 867
- US-B2- 8 338 980

## Beschreibung

Die Erfindung betrifft eine Baugruppe zur Verwendung im Antriebsstrang einer Windkraftanlage nach dem Oberbegriff von Anspruch 1.

Im Betrieb einer Windkraftanlage können Defekte auftreten. Um die Wartungskosten möglichst gering zu halten, ist es wichtig, dass defekte Bauteile gut zugänglich sind und einfach ausgetauscht werden können. Bei den aus dem Stand der Technik bekannten Windkraftanlagen gestaltet sich insbesondere die Demontage des Generators schwierig.

Aus der Druckschrift EP 0811764 B1 ist eine Windkraftanlage bekannt, bei der ein Maschinenträger zur Befestigung eines Getriebes und eines Generators dient. Das Getriebe und der Generator sind befinden sich dabei auf gegenüberliegenden Seiten des Maschinenträgers. Weiterhin ist ein Gehäuse des Generators mit einem Stator an dem Maschinenträger fixiert.

Als Ausgangswelle des Getriebes dient eine Sonnenradwelle. Diese verläuft durch den Maschinenträger hindurch in den Generator hinein. Ein Rotor des Generators ist auf einer rohrförmigen Stützstruktur, die an dem Maschinenträger fixiert ist, gelagert. Die Stützstruktur ist so angeordnet, dass die Sonnenradwelle durch die Stützstruktur verläuft. Die Passverzahnung und ein einstückig mit der Sonnenradwelle verbundene Sonnenrad befinden sich auf gegenüberliegenden Seiten der Stützstruktur.

Auf der Stützstruktur sind die Innenringe zweier Lager fixiert. Deren Außenringe sind in einer Hohlwelle fixiert, welche die Stützstruktur umgibt. Über eine Passverzahnung wird die Hohlwelle von der Sonnenradwelle angetrieben. Die Hohlwelle dient als Polradträger.

Zur Demontage des Generators muss zunächst dessen Gehäuse mitsamt den in dem Gehäuse fixierten Generatorbauteilen abgenommen werden. Der nun freiliegende Rotor muss entfernt werden, um an dessen Lager zu gelangen. Ein Teil der Sonnenradwelle ist nun zwar zugänglich, allerdings kann die Sonnenradwelle nicht entnommen werden. Dazu müsste das Getriebe entfernt werden.

Die Druckschrift US 2010/0133854 A1 offenbart ein Windkraftgetriebe mit integriertem Generator. Ein Rotor des Generators ist mit einer Transportsicherung fixierbar, sodass eine Welle, die den Rotor trägt, entnommen werden kann.

Weitere Windkraftgetriebe mit integriertem Generator sind aus den Druckschriften US 2010/0329867 A1 und US 8,338,980 B2 bekannt.

Der Erfindung liegt die Aufgabe zugrunde, einen Antriebsstrang einer Windkraftanlage so zu gestalten, dass die den aus dem eingangs beschriebenen Stand der Technik bekannten Lösungen innenwohnenden Nachteil vermieden werden. Insbesondere soll die Zugänglichkeit einzelner Komponenten des Antriebsstrangs und damit deren Wartbarkeit verbessert werden.

Eine erfindungsgemäße Baugruppe zur Verwendung im Antriebsstrang einer Windkraftanlage ist in Anspruch 1 definiert und umfasst ein Getriebe, einen Generator und ein Modul. Das Modul weist eine Welle oder eine Nabe, mindestens ein Lager und eine Stützstruktur auf. Die Welle des Moduls oder die Nabe ist mittels des Lagers drehbar in der Stützstruktur gelagert.

Für die Anordnung der Welle des Moduls oder der Nabe und der Stützstruktur relativ zueinander sind zwei Alternativen denkbar. In einer ersten Ausführungsform befindet sich die Welle des Moduls mindestens teilweise innerhalb der Stützstruktur, bzw. verläuft durch die Stützstruktur hindurch. Dabei ist der Innenring des Lagers auf der Welle des Moduls fixiert. Der Außenring des Lagers ist in der Stützstruktur fixiert. In einer zweiten Ausführungsform ist die Stützstruktur mindestens teilweise innerhalb der Nabe angeordnet. Der Innenring des Lagers ist dabei auf der Stützstruktur fixiert. Entsprechend ist der Außenring des Lagers in der Nabe fixiert.

Vorzugsweise lässt das Lager genau einen rotatorischen Freiheitsgrad der Welle des Moduls oder der Nabe zu. Eine Verkippung der Welle oder Nabe um eine orthogonal zu dessen Drehachse stehende Achse ist also nicht möglich. Die Lagerung der Welle des Moduls oder der Nabe erfolgt dabei ausschließlich mittels des mindestens einen Lagers. Weiter Lager sind nicht erforderlich. Dies bedeutet entsprechend, dass die Lagerung der Welle oder Nabe ausschließlich in der Stützstruktur erfolgt. Insbesondere ist also jedes Lager, mit dem die Welle des Moduls oder die Nabe gelagert ist, in der Stützstruktur fixiert. Die Zahl der Lager beträgt vorzugsweise zwei.

Die Welle des Moduls oder die Nabe und eine Welle des Getriebes können ein Wirkflächenpaar bilden, so dass eine drehfeste Verbindung der Welle des Moduls oder der Nabe mit der Welle des Getriebes entsteht. Dies ermöglicht die Übertragung eines Drehmoments von der Welle des Getriebes zu der Welle des Moduls oder der Nabe.

Bei der Welle des Getriebes kann es sich insbesondere um eine Ausgangswelle handeln. Unter einer Ausgangswelle eines Getriebes ist eine Welle mit einer kämmenden Verzahnung zu verstehen, wobei die Welle über die Verzahnung mit einem Ausgangsdrehmoment des Getriebes beaufschlagt wird.

Insbesondere kann die Welle des Getriebes als Sonnenradwelle ausgestaltet sein. Erfindungsgemäß ist die Verbindung der Welle des Getriebes mit der Welle des Moduls oder der Nabe lösbar ausgeführt. Dementsprechend sind also die Welle des Getriebes und die Welle des Moduls oder die Nabe nicht einstückig, sondern zweistückig miteinander verbunden. Diesbezüglich eignet sich besonders eine Passverzahnung, wobei die Welle des Moduls oder die Nabe einen ersten Teil der Passverzahnung und die Welle des Getriebes einen zweiten Teil der Passverzahnung bildet. Die Welle des Moduls oder die Nabe und die Welle des Getriebes können also so zusammengesteckt werden, dass die Passverzahnung entsteht.

Ein Rotor des Generators 2. ist an der Welle des Moduls oder der Nabe fixiert. Als Rotor wird allgemein der nicht stationäre Teil eines Drehgenerators bezeichnet.

Unter Fixierung einer ersten Komponente an einer zweiten Komponente wird allgemein eine Verbindung zwischen der ersten Komponente und der zweiten Komponente verstanden, die jeglicher Relativbewegung zwischen der ersten Komponente und der zweiten Komponente entgegenwirkt. Die Fixierung kann indirekt, d.h. unter Beteiligung einer dritten Komponente oder direkt, d.h. ohne eine dritte Komponente, erfolgen.

Bei einer indirekten Fixierung wird die erste Komponente an der dritten Komponente fixiert. Die dritte Komponente wiederum wird an der zweiten Komponente fixiert. Bei einer direkten Fixierung der ersten Komponente an der zweiten Komponente erfolgt ein Kraftschluss, ein Formschluss oder Stoffschluss zwischen der ersten Komponente und der zweiten Komponente. Dies wird mit der Formulierung "die erste Komponente ist mit der zweiten Komponente verfügt" zum Ausdruck gebracht. Wenn also die erste Komponente mit der zweiten Komponente verfügt ist, ist die erste Komponente direkt an der zweiten Komponente fixiert. Insbesondere besteht dann ein Kraftschluss, ein Formschluss oder Stoffschluss zwischen der ersten Komponente und der zweiten Komponente.

Bevorzugt erfolgt die Fixierung des Rotors des Generators ausschließlich an der Welle des Moduls oder der Nabe. Es gibt also neben der Welle des Moduls oder der Nabe und einer möglichen dritten Komponente, über die der Rotor an der Welle des Moduls oder der Nabe indirekt fixiert sein kann, keine weitere Komponente, an welcher der Rotor - direkt oder indirekt - fixiert ist.

Da die Welle des Moduls oder die Nabe um genau eine Drehachse drehbar gelagert ist, ist der Rotor des Generators infolge der Fixierung an der Welle des Moduls oder der Nabe um dieselbe Drehachse drehbar. Die Welle des Moduls oder die Nabe beschränkt also sämtliche translatorische Freiheitsgrade des Rotors des Generators und genau zwei rotatorische Freiheitsgrade des Rotors des Generators.

Das Getriebe, das Modul und der Generator sind bevorzugt so angeordnet, dass entweder die Welle des Moduls oder die Welle des Getriebes durch die Stützstruktur und entsprechend durch das Lager hindurch verläuft. Insbesondere können die Stützstruktur und das Lager koaxial zu der Welle des Moduls und/oder der Welle des Getriebes um die Welle des Moduls und/oder die Welle des Getriebes herum verlaufen.

Eine solche Anordnung wird erreicht, wenn sich der Generator und das Getriebe mindestens teilweise auf zwei unterschiedlichen Seiten der Stützstruktur und des Lagers befinden. Mindestens ein Teil des Getriebes und mindestens ein Teil des Generators sind also auf unterschiedliche Seiten einer Ebene angeordnet, die durch die Stützstruktur und/oder durch das Lager verläuft. Ein Lastpfad eines von der Welle des Getriebes über die Welle des Moduls zu dem Rotor des Generators übertragenen, koaxial zu der Drehachse des Lagers und des Rotors des Generators ausgerichteten Drehmoments verläuft durch das Lager.

Die Stützstruktur ist lösbar an einem Gehäuse des Getriebes oder des Generators fixiert. . Vorzugsweise sind die Stützstruktur und das Gehäuse miteinander verschraubbar. Weiterhin wird bevorzugt, dass ausschließlich das Gehäuse zur Fixierung der Stützstruktur dient. Die Stützstruktur ist also an keiner weiteren Komponente fixiert. Insbesondere wird eine lösbare Fixierung der Stützstruktur an dem Gehäuse bevorzugt.

Erfindungsgemäß ist eine Montagesicherung vorgesehen. Hierbei handelt es sich um eine - von dem Modul und von jedem Bestandteil des Moduls verschiedene - Vorrichtung, um den Rotor des Generators zu fixieren, vorzugsweise ortsfest, sodass sämtliche translatorische und rotatorische Bewegungen des Rotors des Generators unterbunden werden. Die Montagesicherung ist so ausgestaltet, dass sie sich entfernen lässt.

Der Erfindung entsprechen zwei Ausführungsformen der Montagesicherung. In einer ersten Ausführungsform kann der Rotor des Generators mittels der Montagesicherung an dem Gehäuse des Getriebes fixiert werden. Eine Fixierung an dem Gehäuse des Getriebes wird bevorzugt, da dies die Demontage des Gehäuses des Generators ermöglicht und die Montagesicherung einfach zugänglich macht.

In einer zweiten Ausführungsform der Montagesicherung kann der Rotor des Generators mittels der Montagesicherung an dem Gehäuse des Generators fixiert werden.

Erfindungsgemäß kann das Modul montiert und demontiert werden, ohne dass Teile des Getriebes, insbesondere dessen Welle, oder Teile des Generators, insbesondere dessen Rotor, demontiert werden müssen.

Eine Fixierung der Stützstruktur an dem Gehäuse des Getriebes oder des Generators ist lösbar ausgebildet. Zudem ist der Rotor des Generators an der Welle oder Nabe lösbar fixiert. Auch die drehfeste Verbindung der Welle des Moduls oder der Nabe mit der Welle des Getriebes ist lösbar.

Im Betriebszustand dient die Welle des Moduls oder die Nabe dazu, den Rotor des Generators zu stützen. Wird jedoch das Modul und damit dessen Welle oder die Nabe demontiert, fehlt diese Unterstützung. Um in Anbetracht dessen den Rotor des Generators zu fixieren, ist die Montagesicherung vorgesehen.

Die Montierbarkeit und Demontierbarkeit des Moduls ist insbesondere im Wartungsfall von Vorteil. So reduziert sich die Zeit, die benötigt wird, um im Schadensfall eine der Komponenten des Moduls instand zu setzen. Es ist nicht erforderlich, den Generator - wie bei den aus dem Stand der Technik bekannten Lösungen - Bauteil für Bauteil zu demontieren, um an das schadhafte Teil zu gelangen. Stattdessen kann, etwa in einer Werkstatt, ein Modul vorbereitet werden, dass gegen das Modul mit der schadhaften Komponente ausgetauscht wird.

Weiterhin reduziert sich das Gewicht der Komponenten, die zur Montage und Demontage mittels eines Krans gehoben werden müssen. Während bisher üblicherweise eine externer Kran erforderlich war, um den Generator vom Getriebe zu trennen, kann das Modul mittels eines in die Triebwerksgondel der Windkraftanlage integrierten Krans montiert und demontiert werden. Dies spart Zeit und eliminiert die für die Bereitstellung des externen Krans anfallenden Kosten.

Dass der Rotor des Generators an seinem Platz verweilen kann, ist darüber hinaus von Vorteil, da der Rotor des Generators in der Regel starke Permanentmagnete aufweist. Muss der Rotor des Generators entfernt werden, besteht die Gefahr einer Anziehung ferromagnetischer Komponenten innerhalb der Triebwerksgondel. Dadurch könnten in der Triebwerksgondel arbeitende Monteure verletzt werden. Auch besteht die Gefahr einer Beschädigung des Rotors.

Eine Transportsicherung kann vorgesehen sein, um den Generator ohne das Modul transportieren zu können. Mittels einer derartigen Transportsicherung kann der Rotor des Generators an dem Gehäuse des Getriebes fixiert werden. Dies ist insbesondere dann von Bedeutung, wenn das Modul vom Hersteller des Getriebes hergestellt und der Generator (ohne das Modul) von einem Generatorhersteller zugeliefert wird. Je nach Ausgestaltung der Baugruppe kann auch die Montagesicherung als Transportsicherung verwendet werden.

In einer besonders bevorzugten Weiterbildung der Erfindung erfüllt das Modul die Funktion der Transportsicherung. Zu diesem Zweck kann mindestens ein erster Teil des Gehäuses des Generators mindestens an der Stützstruktur fixiert werden. Das Gehäuse des Getriebes ist dann so ausgestaltet, dass die Stützstruktur an dem Gehäuse des Getriebes fixiert werden kann.

Die Fixierung des ersten Teils des Gehäuses des Generators an der Stützstruktur ermöglicht es, das Modul und den Generator als Einheit zu montieren und zu demontieren. Das Modul kann also mit dem Generator als Einheit montiert und demontiert werden, während mindestens der erste Teil des Gehäuses des Generators an der Stützstruktur fixiert ist.

Eine derartige Weiterbildung versetzt einen Hersteller des Generators in die Lage, das Modul zum Testen des Generators zu verwenden. Der Generator wird dann mit dem Modul an einen Hersteller des Getriebes geliefert, wobei das Modul als Transportsicherung dienen kann.

Neben dem Rotor des Generators verbleibt auch der Stator des Generators in seiner Position, wenn das Modul montiert und demontiert wird. Das Modul kann erfindungsgemäß montiert und demontiert werden, während mindestens ein erster Teil des Gehäuses des Generators an dem Gehäuse des Getriebes fixiert ist. Bevorzugt ist dabei das Gehäuse des Generators dabei als Träger für den Stator des Generators ausgebildet.

Als Stator bezeichnet man allgemein den feststehenden, unbeweglichen Teil eines Generators.

Die Stützstruktur und damit auch das Lager befinden sich bevorzugt außerhalb des Gehäuses des Getriebes. Insbesondere befinden sich also die Stützstruktur und das Lager außerhalb des Gehäuses des Getriebes, bevor sie montiert werden und nachdem sie montiert wurden, d.h. nachdem die Stützstruktur an dem Gehäuse des Getriebes oder des Generators fixiert wurde.

Bevorzugt wird weiterhin eine Anordnung der Stützstruktur und damit des Lagers innerhalb des Gehäuses des Generators im montierten Zustand. Wenn die Stützstruktur an dem Gehäuse des Getriebes oder des Generators fixiert wurde, befindet sie sich demnach innerhalb des Gehäuses des Generators.

Um das Modul warten zu können, wird das Gehäuse des Generators vorzugsweise derart ausgeführt, dass sich das Modul, nachdem die Fixierung der Stützstruktur an dem Gehäuse des Getriebes oder des Generators gelöst wurde, und nachdem die Fixierung des Rotors des Generators an der Welle oder Nabe gelöst wurde und der Rotor des Generators mittels der Montagesicherung fixiert wurde, aus dem Gehäuse des Generators entnehmen lässt. Insbesondere muss dazu das Modul von außerhalb durch das Gehäuse des Generators zugänglich sein. Das Modul kann also montiert und demontiert werden, während mindestens ein erster Teil des Gehäuses des Generators an dem Gehäuse des Getriebes fixiert ist.

Der erste Teil des Gehäuses des Generators weist bevorzugt eine Öffnung auf, durch die das Modul zur Montage und Demontage zugänglich ist. Insbesondere kann das Modul zur Montage und Demontage durch die Öffnung in das Innere des Getriebes des Generators eingeführt werden und aus dem Inneren des Gehäuses des Generators entfernt werden.

Vorzugsweise ist das Gehäuse des Generators mindestens zweiteilig ausgeführt. Eine Abdeckung bildet dabei einen zweiten Teil des Gehäuses des Generators. Die Abdeckung kann so an dem ersten Teil des Gehäuses des Generators fixiert werden, dass sie die Öffnung verschließt. Zur Montage und Demontage des Moduls kann die Abdeckung abgenommen werden, so dass die Öffnung freiliegt.

Bei einem zweiteiligen Gehäuse mit der oben beschriebenen Abdeckung als zweiten Teil ist es möglich, die Baugruppe so auszugestalten, dass der Rotor mittels der Montagesicherung an dem ersten Gehäuse des Generators fixiert werden kann.

Mindestens ein Fixierelement kann vorgesehen sein, die Stützstruktur an dem Gehäuse des Getriebes oder des Generators zu fixieren. Mindestens ein weiteres Fixierelement kann vorgesehen sein, mindestens den ersten Teil des Generators an der Stützstruktur zu fixieren. Insbesondere lösbare Fixierungen der Stützstruktur an dem Gehäuse des Getriebes oder des Generators sowie des ersten Teil des Generators an der Stützstruktur können mittels eines solchen Fixierelements realisiert werden.

Um das Modul zu montieren und demontieren zu können, müssen die Fixierelemente aber zugänglich sein. Daher weist der Rotor des Generators mindestens eine erste Aussparung auf, durch die mindestens eins der Fixierelemente eingebracht und/oder entfernt werden kann.

Bei dem ersten Zwischenstück handelt es sich um ein Bauteil, das als Verbindung zwischen dem Rotor des Generators und der Welle des Moduls oder der Nabe vorgesehen sein kann. Der Rotor des Generators kann also mit dem ersten Zwischenstück verfügt werden. Das Zwischenstück kann entsprechend mit der Welle des Moduls oder der Nabe verfügt werden.

Üblicherweise ist das Modul relativ zu dem Rotor des Generators getriebeseitig, d.h. in Richtung des Getriebes versetzt, angeordnet. Entsprechend ist der Rotor des Generators relativ zu dem Modul generatorseitig, d.h. in Richtung des Generators versetzt, angeordnet. Um dennoch das Modul montieren und demontieren zu können, während der Rotor des Generators mittels der Montagesicherung fixiert ist, weist der Rotor des Generators eine Aussparung auf, durch die das Modul mindestens teilweise hindurch geführt werden kann. Diese Aussparung ist bevorzugt mittig angeordnet, d.h. die Drehachse des Rotors des Generators verläuft durch die Aussparung.

In Abhängigkeit von der jeweiligen Ausgestaltung des Moduls können verschiedene Zwischenstücke zur Verbindung mit dem Rotor des Generators oder mit der Welle des Getriebes erforderlich sein. Das oben genannte erste Zwischenstück wird vorzugsweise verwendet, um im Falle einer Ausgestaltung des Moduls mit der Welle den Rotor des Generators mit dieser Welle zu verbinden. Die Welle lässt sich so anordnen, dass sie in das Gehäuse des Getriebes hineinragt. Innerhalb des Gehäuses des Getriebes befindet sich dann ein Element, vorzugsweise eine Passverzahnung, um die Welle des Getriebes drehfest mit der Welle des Moduls zu verbinden.

Im Falle der Ausgestaltung des Moduls mit der Nabe kann die Nabe direkt mit dem Rotor des Generators verfügt werden. Allerdings wird dann bevorzugt ein zweites Zwischenstück verwendet, um die Nabe mit der Welle des Getriebes drehfest zu verbinden. Dabei ist die Nabe mit dem zweiten Zwischenstück verfügt. Insbesondere wird bevorzugt, dass die Nabe und das zweite Zwischenstück lösbar verfügt werden, so dass das zweite Zwischenstück zur Montage und Demontage des Moduls von der Nabe entfernt werden kann. Weiterhin ist das zweite Zwischenstück ausgebildet, mit der Welle des Getriebes eine drehfeste Verbindung einzugehen. Vorzugsweise wird das zweite Zwischenstück mittels einer Passverzahnung drehfest mit der Welle des Getriebes verbunden.

Um die Montage und Demontage des Moduls zu ermöglichen, sind in einer weiteren bevorzugten Weiterbildung das erste Zwischenstück und/oder das zweite Zwischenstück demontierbar. Bevorzugt wird insbesondere, dass das erste Zwischenstück und/oder das zweite Zwischenstück demontiert werden können, wenn der Rotor des Generators mittels der Montagesicherung fixiert ist, während mindestens der erste Teil des Gehäuses des Generators an dem Gehäuse des Getriebes fixiert ist, und während das Modul montiert ist, d.h. die Stützstruktur an dem Gehäuse des Getriebes oder des Generators fixiert ist.

Dass das erste Zwischenstück, wie oben beschrieben, demontiert werden kann wird besonders bevorzugt wird, wenn das erste Zwischenstück keine Aussparung aufweist. In diesem Fall kann es erforderlich sein, das erste Zwischenstück zu demontieren, damit das Fixierelement, das dazu dient, die Stützstruktur an dem Gehäuse des Getriebes oder Generators zu fixieren, zugänglich ist.

Durch den Generator hervorgerufene Streuströme können zu Funkenschlag zwischen den Wälzkörpern und den Laufflächen eines Lagers führen. Dies hat Beschädigungen des Lagers zur Folge. In einer bevorzugten Ausführungsform ist daher der Rotor des Generators mittels einem oder mehreren Isolatoren elektrisch gegenüber den übrigen Komponenten der Baugruppe isoliert. Die Nabe oder das erste Zwischenstück weisen dazu einen ersten Teil und einen zweiten Teil auf, wobei der Rotor mit dem ersten Teil verfügt werden kann. Die Isolatoren dienen dazu, den ersten Teil gegenüber dem zweiten Teil elektrisch zu isolieren. Es wird also verhindert, dass elektrische Ströme zwischen dem ersten Teil und dem zweiten Teil fließen.

Weiterhin müssen die Isolatoren eine Fixierung des ersten Teils an dem zweiten Teil gewährleisten. Ein erster Isolator kann daher ausgebildet sein, den ersten Teil in mindestens eine radiale Richtung, vorzugsweise in jede radiale Richtung, gegenüber dem zweiten Teil abzustützen. Dies lässt sich erreichen, indem etwa der erste Isolator radial zwischen dem ersten Teil und dem zweiten Teil angeordnet wird, sodass sich ein in radialer Richtung zwischen dem ersten Teil und dem zweiten Teil durch den ersten Isolator verlaufender Lastpfad ausbildet.

Besonders bevorzugt wird eine Ausführungsform mit einem zweiten und einem dritten Isolator. Diese Isolatoren werden jeweils zwischen dem ersten Teil und dem zweiten Teil verspannt. Der zweite Teil umklammert den ersten Teil und drückt den zweiten und den dritten Isolator gegen den ersten Teil. Der zweite Teil verspannt also den ersten Teil zwischen dem zweiten und den dritten Isolator. Dabei wirken auf die beiden Isolatoren Kräfte in entgegengesetzten Richtungen.

Durch die Beschriebene Anordnung des zweiten und dritten Isolators lässt sich die Funktionalität einer Rutschkupplung realisieren. Bleibt ein von dem zweiten Teil über den zweiten und den dritten Isolator übertragenes Drehmoment unter einem bestimmten Schwellenwert, ist der zweite Teil über den zweiten und dem dritten Isolator kraftschlüssig mit dem ersten Teil verbunden. Der erste und der zweite Teil rotieren dann mit gleicher Drehzahl.

Übersteigt hingegen das übertragene Drehmoment den Schwellenwert, kommt es zu Schlupf zwischen dem ersten und dem zweiten Isolator und dem ersten und/oder zweiten Teil. Dies schützt das Getriebe vor Drehmomentspitzen, die etwa infolge von Kurzschlüssen im Generator oder im Stromnetz auftreten können.

Ein erfindungsgemäßes Verfahren, um das oben beschriebene Modul aus der Baugruppe zu entfernen umfasst die folgenden Schritte:
- ggf. Öffnen des Generators, bzw. Entfernen der Abdeckung des Gehäuses des Generators;
- Fixieren des Rotors des Generators mittels der Montagesicherung;
- Lösen der Fixierung des Rotors des Generators an der Welle oder Nabe;
- ggf. Demontieren des ersten Zwischenstücks und/oder des zweiten Zwischenstücks;
- Lösen der Fixierung der Stützstruktur an dem Gehäuse des Getriebes oder des Generators, etwa in dem das Fixierelement entfernt wird;
- Entfernen des Moduls.

Diese Verfahrensschritte werden vorzugsweise in der angegebenen Reihenfolge ausgeführt. Die Angabe der Reihenfolge ist dabei nicht abschließend. So sind alternative Ausführungsformen der erfindungsgemäßen Verfahren mit einer abweichenden Reihenfolge der angegebenen Verfahrensschritte möglich.

Durch Ausführung gegenteiliger Verfahrensschritte in umgekehrter Reihenfolge ist es möglich, das Modul in der Baugruppe zu montieren. Ein solches Verfahren umfasst die folgenden Schritte:
- Einsetzen des Moduls;
- Fixieren der Stützstruktur an dem Gehäuse des Getriebes oder des Generators;
- ggf. Verfügen des Rotors des Generators mit dem ersten Zwischenstück und Verfügen des ersten Zwischenstücks mit der Welle des Moduls oder der Nabe, und/oder Ausbilden einer drehfesten Verbindung zwischen dem zweiten Zwischenstück und der Welle des Getriebes und Verfügen des zweiten Zwischenstücks mit der Nabe;
- Fixieren des Rotors des Generators an der Welle des Moduls oder der Nabe;
- Entfernen der Montagesicherung;
- Schließen des Gehäuses des Generators.

Nachfolgend werden Ausführungsbeispiele der Erfindung beschrieben, die in den Figuren dargestellt sind. Übereinstimmende Bezugszeichen kennzeichnen dabei gleiche oder funktionsgleiche Merkmale. Im Einzelnen zeigt
Fig. 1 Modul zur Kopplung eines Getriebes mit einem Generator mit einer innenliegenden Welle;
Fig. 2 eine erste Möglichkeit zur Montage und Demontage eines solchen Moduls;
Fig. 3 eine zweite Möglichkeit zur Montage oder Demontage eines solchen Moduls;
Fig. 4 ein Modul zur Kopplung eines Getriebes mit einem Generator mit einer außenliegenden Nabe;
Fig.5 eine Möglichkeit zur Montage und Demontage eines solchen Moduls;
Fig. 6 eine Montagesicherung;
Fig. 7 eine Vorrichtung zum Halten einer Getriebeausgangswelle;
Fig. 8 ein Modul mit einem daran fixierten Getriebegehäuse; und
Fig. 9 die Montage eines solchen Moduls;
Fig. 10 ein Modul, dessen grundsätzlicher Aufbau dem in Fig. 8 dargestellten Ausführungsbeispiel entspricht.

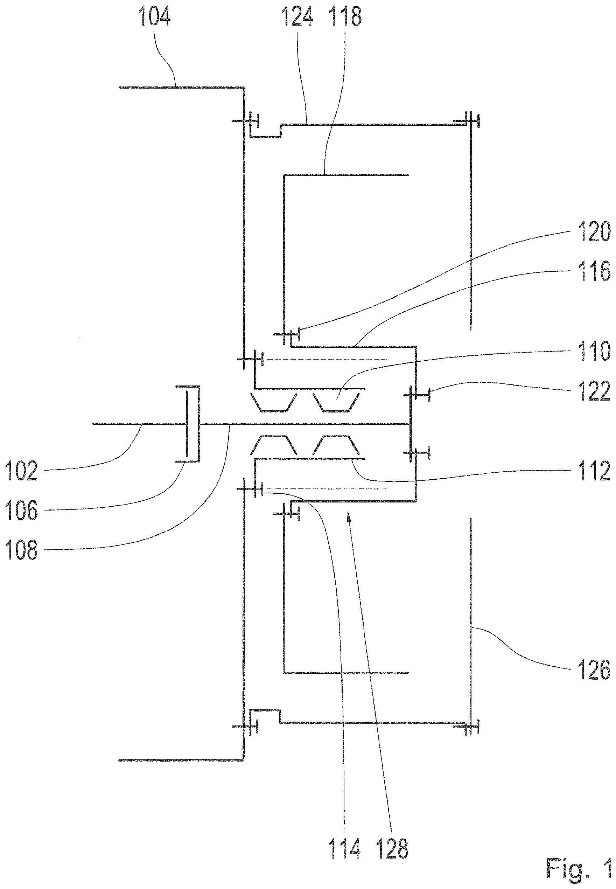

Eine erste Welle 102 gemäß Figur 1 befindet sich im Inneren eines Getriebegehäuses 104. Mittels einer Passverzahnung 106 ist die erste Welle 102 drehfest mit einer zweiten Welle 108 verbunden. Ebenso wie die erste Welle 102 befindet sich die Passverzahnung 106 im Inneren des Getriebegehäuses 104. Die zweite Welle 108 hingegen befindet sich nur teilweise innerhalb des Getriebegehäuses 104. Ein weiterer Teil der zweiten Welle 108 ragt aus dem Getriebegehäuse 104 hinaus.

De zweite Welle 108 ist mittels zweier Lager 110 drehbar in einer Stützstruktur 112 gelagert. Dabei sind die Innenringe der Lager 110 auf der zweiten Welle 108 fixiert. Die Außenringe der Lager 110 sind in der Stützstruktur 112 fixiert. Letztere ist mittels Schrauben 114 mit dem Getriebegehäuse 104 verfügt.

Ein erstes Zwischenstück 116 dient dazu, die zweite Welle 108 mit einem Rotor 118 zu verbinden. Der Rotor ist mittels Schrauben 120 mit dem ersten Zwischenstück 116 verfügt. Weiterhin ist das erste Zwischenstück mittels Schrauben 122 mit einem Flansch der zweiten Welle 108 verfügt.

Ein Generatorgehäuse 124 kapselt den Rotor 118, das erste Zwischenstück 116, die Stützstruktur 112, die Lager 110 sowie ein Teil der zweiten Welle 108. Das Getriebegehäuse 104 und das Generatorgehäuse 124 sind miteinander verschraubt.

Um das Innere des Generatorgehäuses124 für Wartungsarbeiten zugänglich zu machen, weist das Generatorgehäuse 124 eine abnehmbare Abdeckung 126 auf. Die Abdeckung 126 ist mit einem weiteren Teil des Generatorgehäuses 124 verschraubt.

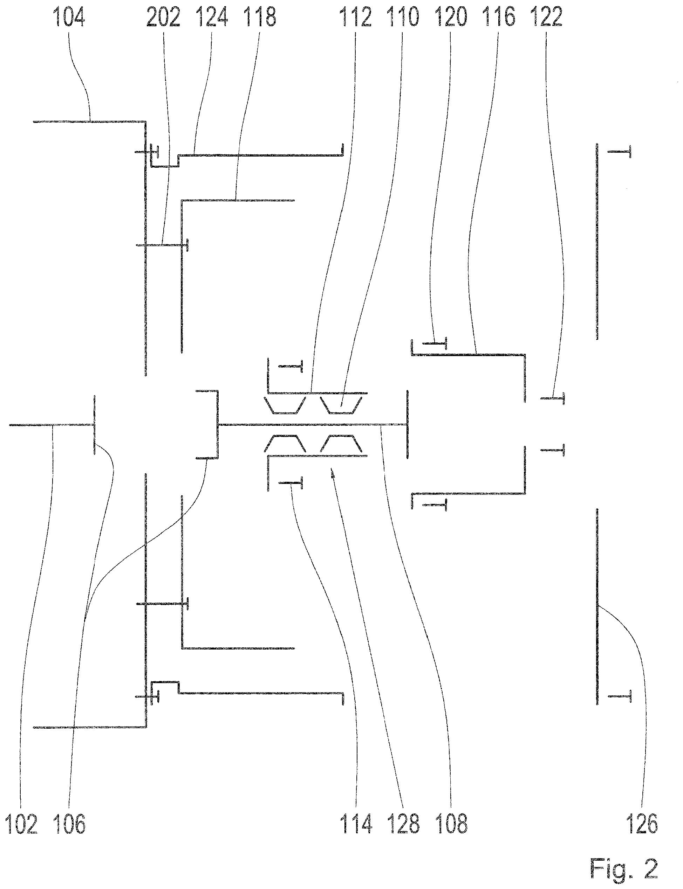

Die zweite Welle 108, die Lager 110 und die Stützstruktur 116 bilden ein Modul 128, das demontiert werden kann. Figur 2 veranschaulicht dies.

Um das Modul 128 zu demontieren, wird zunächst das Innere des Generatorgehäuses 124 zugänglich gemacht, indem die Abdeckung 126 entfernt wird. Nun kann der Rotor 108 mittels Montagesicherungen 202 an dem Getriebegehäuse 104 fixiert werden, um das Modul 128 zu demontierten. Hierzu ist es erforderlich, die Schrauben 114 zugänglich zu machen. Gemäß dem in Figur 2 veranschaulichten Verfahren geschieht dies, in dem nach Lösen der Schrauben 120 und 122 das erste Zwischenstück 116 abgenommen wird. Der Rotor 108 wird dabei von den Montagesicherungen 202 in Position gehalten.

Nach dem Entfernen des ersten Zwischenstücks 110 sind die Schrauben 114 und das Modul 128 zugänglich. Wenn die Schrauben 114 entfernt wurden, kann das Modul 128 entnommen werden. Die erste Welle 102 verbleibt dabei an ihrem Platz.

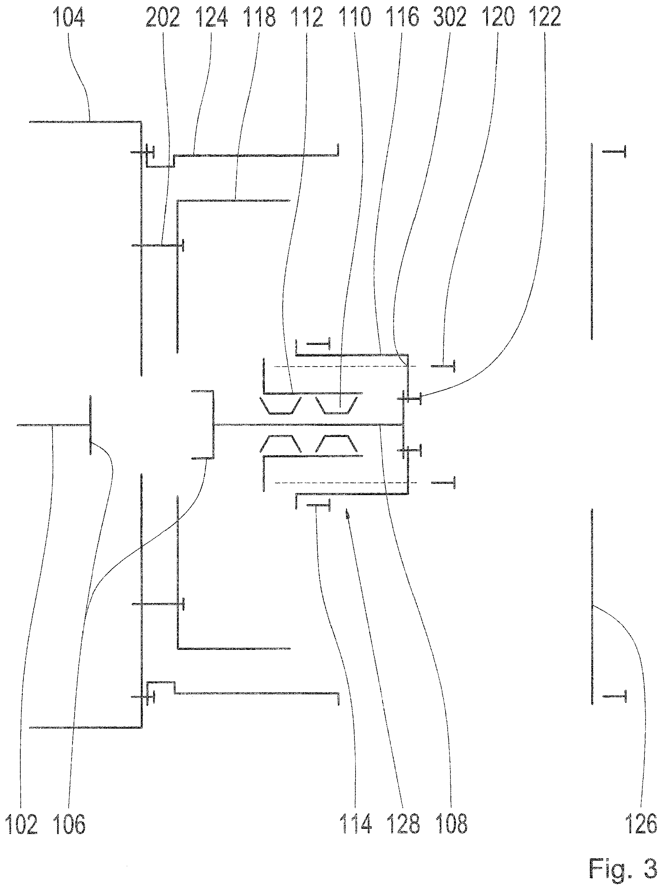

Ein modifiziertes Verfahren zeigt Figur 3. Das erste Zwischenstück 120 weist hier Aussparungen 302 auf. Zu jeder der Schrauben 114 gibt es eine Aussparung 302. Die Aussparungen 302 sind so angeordnet, dass die Schrauben 114 durch die Aussparungen 302 hindurch zugänglich sind. Um die Schrauben 114 zu entfernen, muss daher die Verbindung zwischen dem ersten Zwischenstück 120 und dem Flansch der zweiten Welle 108 nicht gelöst werden. Das erste Zwischenstück 110 verbleibt stattdessen auf dem Flansch der zweiten Welle 108.

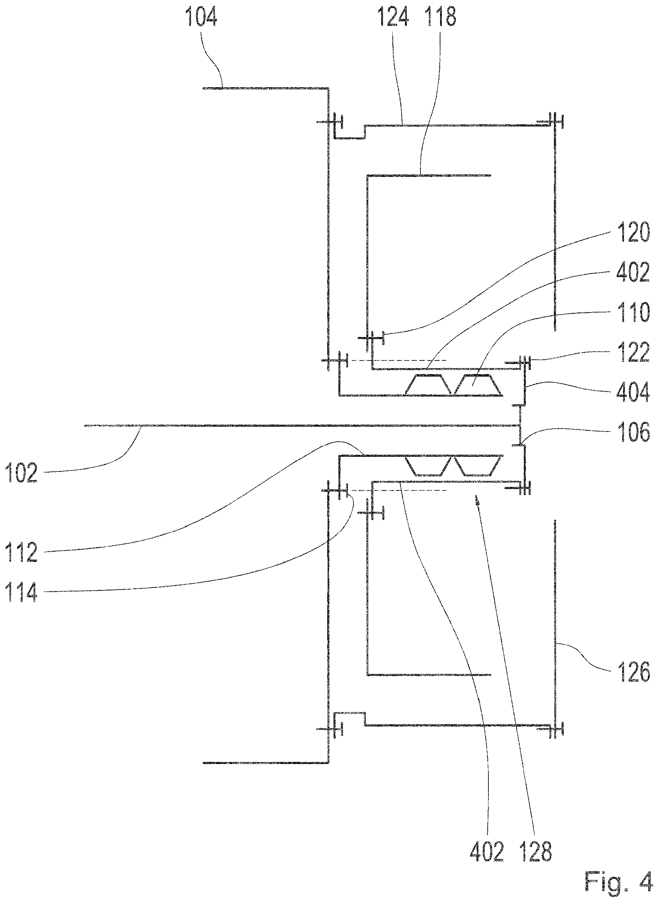

Das in Figur 4 dargestellte Modul 128 weist statt der zweiten Welle 108 eine Nabe 402 auf. Die Stützstruktur 112 ist so angeordnet, dass sie sich teilweise im Inneren der Nabe 402 befindet. Mittels der Lager 110 ist die Nabe 402 drehbar in der Stützstruktur 112 gelagert. Die Innenringe der Lager 110 sind auf der Stützstruktur 112 fixiert. Auf den Außenringen der Lager 110 ist die Nabe 402 fixiert.

Die erste Welle 102 ragt aus dem Getriebegehäuse 104 hinaus und führt durch die Stützstruktur 112 hindurch. Auf der dem Getriebegehäuse 104 gegenüberliegenden Seite der Stützstruktur 112 befindet sich die Passverzahnung 106, mittels der die erste Welle 102 drehfest mit einem zweiten Zwischenstück 404 verbunden ist.

Die Schrauben 122 dienen dazu, das zweite Zwischenstück 404 mit der Nabe 402 zu verfügen. Auf diese Weise kommt zwischen der ersten Welle 102 und der Nabe 402 eine drehfeste Verbindung zustande.

Die Schrauben 120 dienen dazu, den Rotor 118 mit der Nabe 402 zu verfügen.

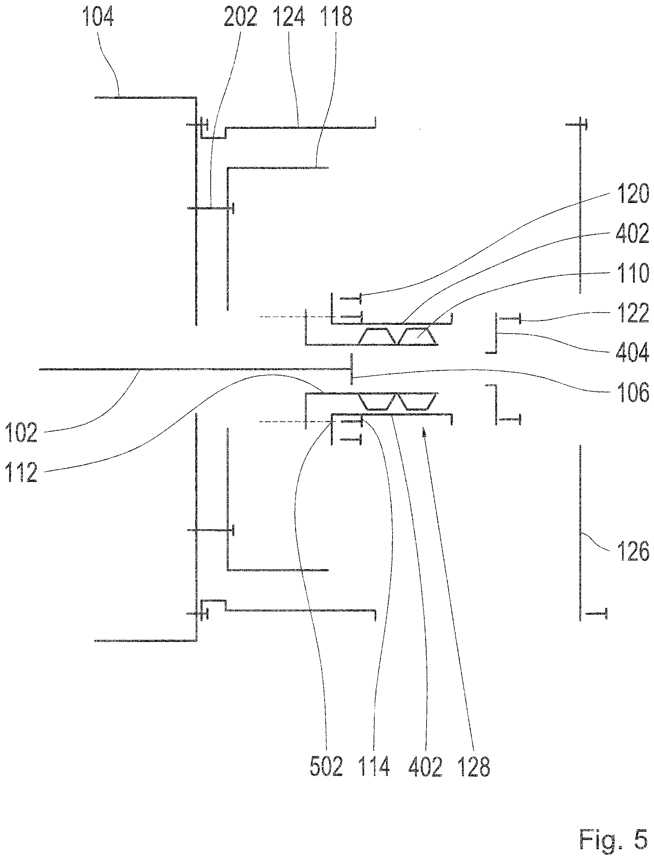

Bei dem in Figur 4 dargestellten Ausführungsbeispiel verdeckt die Nabe 402 die Schrauben 114, mit denen die Stützstruktur 112 an dem Getriebegehäuse 104 fixiert ist. Um das Modul 128, wie in Figur 5 dargestellt, zu demontieren, ist die Nabe 402 daher mit Aussparungen 502 versehen. Die Aussparungen 502 sind so angeordnet, dass die Schrauben 114 durch die Aussparungen 502 hindurch zugänglich sind und durch die Aussparungen 502 hindurch eingesetzt und entnommen werden können. Zur Demontage des Moduls 128 wird zunächst die Abdeckung 126 entfernt. Wenn der Rotors 118 mittels der Montagesicherungen 202 fixiert ist, kann das Modul 128 demontiert werden. Nach Lösen der Schrauben 120 und 122 wird zunächst das zweite Zwischenstück 404 entnommen. Durch die Aussparungen 502 hindurch können die Schrauben 114 entfernt werden. Dadurch löst sich die Fixierung der Stützstruktur 112 an dem Getriebegehäuse 104, so dass das Modul 128 demontiert werden kann. Die erste Welle 102 verbleibt dabei an ihrem Platz.

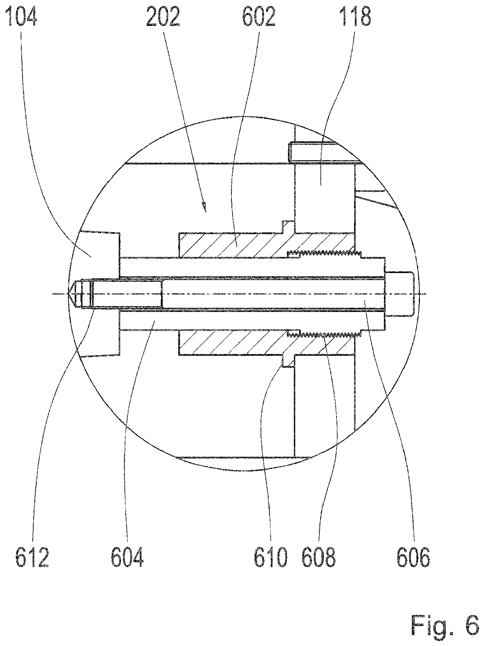

Figur 6 zeigt beispielhaft eine Ausgestaltung der Montagesicherung 202. Die Montagesicherung 202 besteht aus einem äußeren Mantel 602, einem inneren Mantel 604 und einer Schraube 606. Der äußere Mantel 602 ist in eine Aussparung des Rotors 118 eingelassen. Da der äußere Mantel 602 durch die von der Abdeckung 126 freigegebene Öffnung des Generatorgehäuses 124 nicht zugänglich ist, ist der äußere Mantel 602 vormontiert.

Um den Rotor zu fixieren, wird der innere Mantel 604 in den äußeren Mantel 602 eingeführt und mit diesem verschraubt. Dazu bilden der äußere Mantel 602 und der innere Mantel 604 eine Gewindepaarung 608. Wenn der inneren Mantel 604 in den äußeren Mantel 602 eingeschraubt wird, kommt er in den Kontakt zu dem Getriebegehäuse 104. Ein Widerlager 610 verhindert, dass der äußere Mantel 602 dabei aus dem Rotor 118 herausgedrückt wird.

In den im dem äußeren Mantel 602 eingeschraubten inneren Mantel 604 wird die Schraube 606 eingeführt. Das Getriebegehäuse 104 weist ein Gewinde 612 auf, in das die Schraube 606 hiernach eingeschraubt werden kann. Damit ist der Rotor 118 an dem Getriebegehäuse 104 fixiert, so dass das Modul 128 demontiert werden kann.

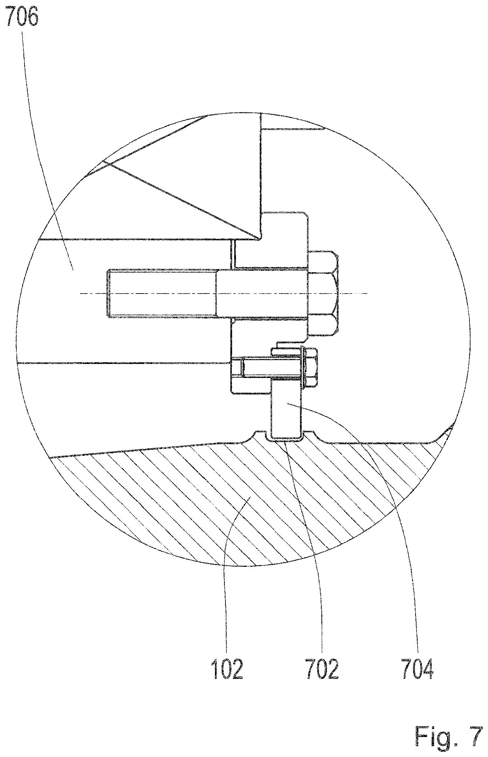

Wenn das Modul 128 entfernt wird, besteht die Gefahr, dass die erste Welle 102 in radialer Richtung abkippt und/oder sich in axialer Richtung verschiebt. Eine Vorrichtung, deren Aufgabe es ist, dies zu verhindern, zeigt Figur 7. Die erste Welle 102 weist eine konzentrisch zu der ersten Welle 102 verlaufende Nut 702 auf. In diese Nut 702 greift eine Scheibe 704 ein. Die Scheibe 704 ist an einer Getriebekomponente 706 fixiert, die in axialer Richtung und in radialer Richtung nicht verschiebbar ist. Bei der Komponente 706 kann es sich beispielsweise um einen Planetenträger handeln. Auch sind Ausführungsbeispiele denkbar, bei denen das Getriebegehäuse 104 die Komponente 706 bildet.

Im regulären Betrieb befindet sich zwischen der Scheibe 704 und der Nut 702 ein Luftspalt. Die Scheibe 704 und die Nut 702 sind unter diesen Umständen funktionslos. Insbesondere wird die Drehbewegung der ersten Welle 102 nicht durch die Scheibe 704 behindert. Im Falle der Demontage des Moduls 128 hingegen führt die in der Nut 702 verlaufende Scheibe 704 die erste Welle 102 und verhindert ein Abkippen in radialer Richtung oder eine Verschiebung in axialer Richtung.

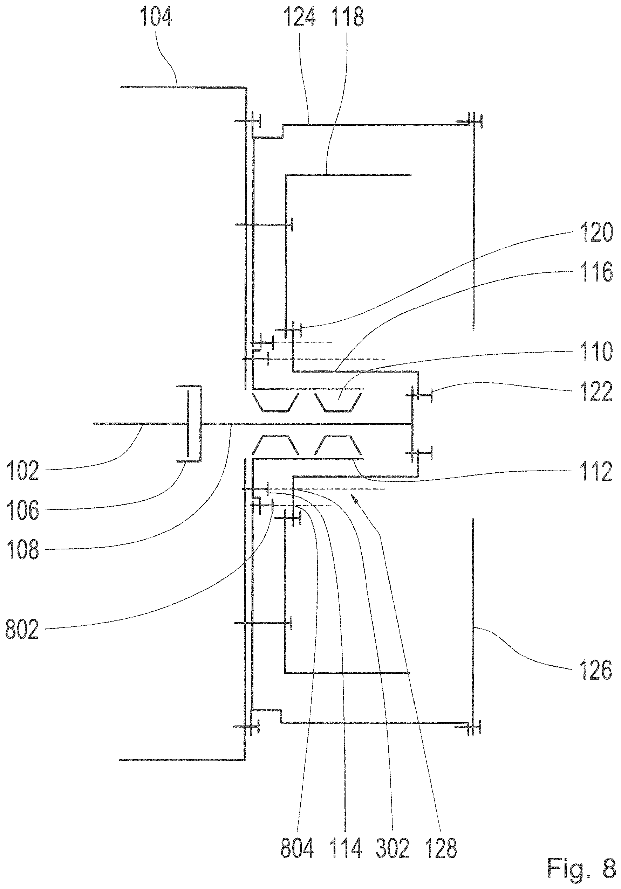

Wie in Fig. 8 dargestellt, können weitere Schrauben 802 vorgesehen sein, um das Generatorgehäuse 124 an der Stützstruktur 112 zu fixieren. Das Generatorgehäuse 124 ist dabei so ausgebildet, dass es mit dem Getriebegehäuse 104 und der Stützstruktur 112 verschraubt werden kann. Das erste Zwischenstück 116 weist neben den Aussparungen 302, durch welche die Schrauben 114 zur Fixierung der Stützstruktur 112 an dem Getriebegehäuse 104 zugänglich sind, weitere Aussparungen 804 auf. Die Aussparungen 804 dienen dazu, die Schrauben 802, mit denen das Generatorgehäuse 124 an der Stützstruktur 112 fixiert werden kann, zugänglich zu machen.

Zur Demontage des Moduls 128 werden die Schrauben 114 und die Schrauben 802 gelöst. Das Generatorgehäuse 124 bleibt dabei mit dem Getriebegehäuse 104 verschraubt.

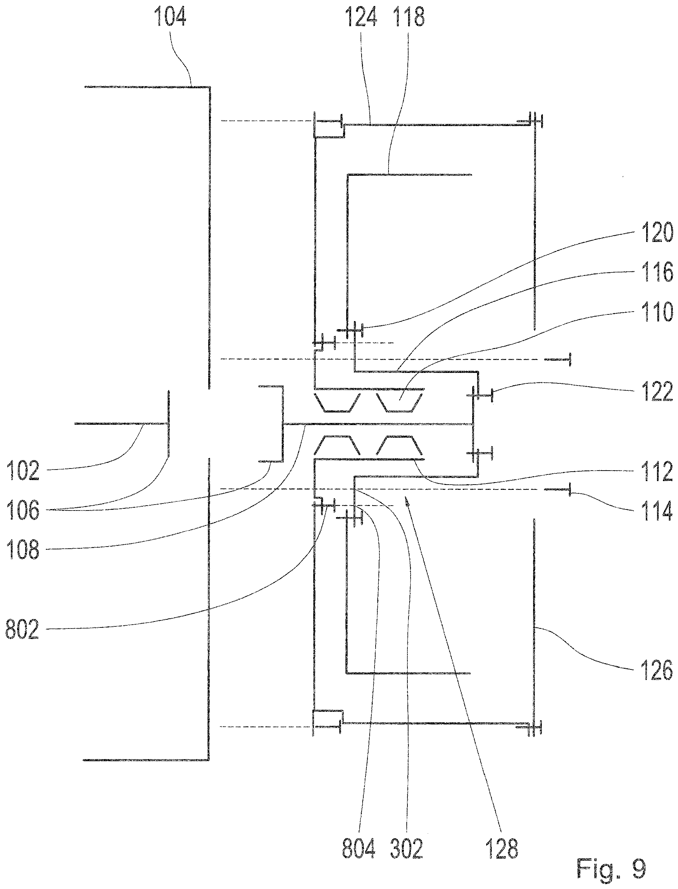

Die Montage des Moduls 128 zusammen mit dem Rotor 118 und dem Generatorgehäuse 124 zeigt Fig. 9. Die Stützstruktur 112 ist mittels der Schrauben 802 an dem Generatorgehäuse 124 fixiert. Über das erste Zwischenstück 116 ist der Rotor 118 an der zweiten Welle 108 angebracht. Somit wird der Rotor 108 über die zweiten Welle 108 von dem Modul 128 in Position gehalten.

Das Getriebegehäuse 124, der Rotor 118 und das Modul 128 können als Einheit an dem Getriebegehäuse 104 montiert werden. Das Modul 128 und das Generatorgehäuse 124 werden dabei mit dem Getriebegehäuse 104 verschraubt. Weiterhin wird die Passverzahnung 106 zusammengesteckt, sodass eine drehfeste Verbindung der ersten Welle 102 mit der zweiten Welle 108 zustande kommt.

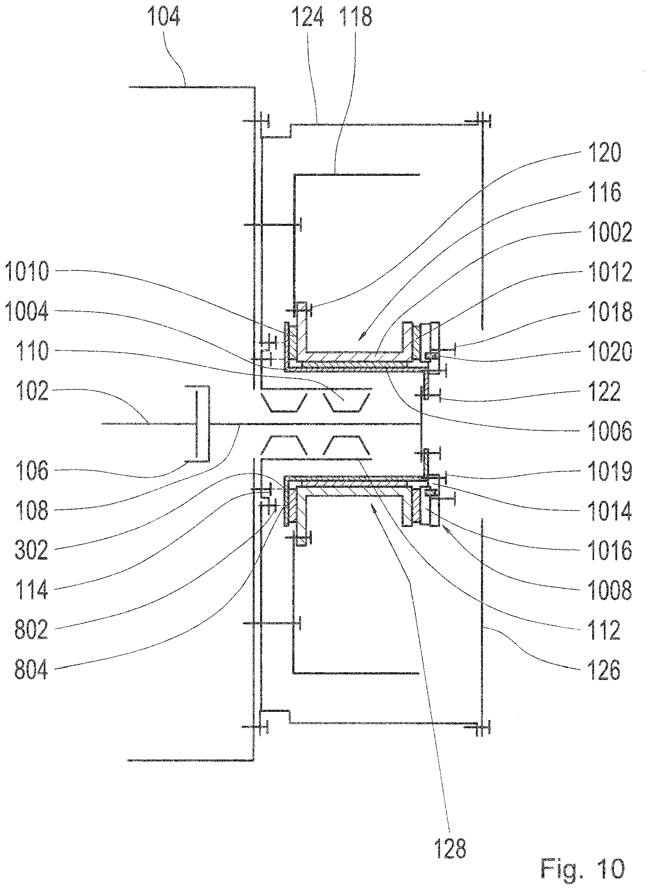

Fig. 10 zeigt ein Modul 128, dessen grundsätzlicher Aufbau dem in Fig. 8 dargestellten Ausführungsbeispiel entspricht. Das erste Zwischenstück 116 ist dabei allerdings als Rutschkupplung ausgeführt.

Das erste Zwischenstück 116 weist einen ersten Teil 1002 und einen zweiten Teil 1004 auf. Mittels der Schraube 120 ist der Rotor 118 mit dem ersten Teil 1002 verfügt.

Ein erster Isolator 1006 befindet sich in radialer Richtung zwischen dem ersten Teil 1002 und dem zweiten Teil 1004. Zusammen mit dem ersten Teil 1002 und dem zweiten Teil 1004 verläuft der erste Isolator 1006 konzentrisch um die Drehachse des Rotors 118 derart, dass eine Verdrehung des ersten Teils 1002 um die Drehachse des Rotors 118 relativ zu dem zweiten Teil 1004 möglich ist.

Der zweite Teil 1004 umfasst eine Spannvorrichtung 1008. Diese bringt eine Kraft auf, um den ersten Teil 1002 zwischen einem zweiten Isolator 1010 und einem dritten Isolator 1012 einzuspannen. Die Spannvorrichtung 1008 weist eine Grundplatte 1014 und eine relativ zu der Grundplatte 1014 in axialer Richtung verschiebbare Platte 1016 auf.

Mittels Schrauben 1018 kann die verschiebbare Platte 1016 gegenüber der Grundplatte 1014 verspannt werden. Die Grundplatte 1014 ist mittels Schrauben 1019 an dem zweiten Teil 1004 fixiert. Infolgedessen wirkt eine Kraft auf den zweiten Isolator 1012, die über den ersten Teil 1002 auf den ersten Isolator 1010 und von dort wiederum auf den zweiten Teil 1004 übertragen wird. Ein Bolzen 1020, vorzugsweise als ein Zylinderstift ausgeführt, ist vorgesehen, um die verschiebbare Platte 1016 gegen eine Verdrehung gegenüber der Grundplatte 1014 zu sichern.

Alternativ zu dem Zwischenstück 116 kann auch die in Fig. 4 dargestellte Nabe 402 entsprechend der in Fig. 10 dargestellt Lösung mittels des ersten Teils 1002, des zweiten Teils 1004, ersten Isolators 1006, zweiten Isolators 1010, des dritten Isolators 1012 und der Spannvorrichtung 1008 als Rutschkupplung ausgeführt werden.

### Bezugszeichen

- 102: erste Welle
- 104: Getriebegehäuse
- 106: Passverzahnung
- 108: zweite Welle
- 110: Lager
- 112: Stützstruktur
- 114: Schrauben
- 116: erstes Zwischenstück
- 118: Rotor
- 120: Schraube
- 122: Schraube
- 124: Generatorgehäuse
- 126: Abdeckung
- 128: Modul
- 202: Montagesicherung
- 302: Aussparung
- 402: Nabe
- 404: zweites Zwischenstück
- 502: Aussparung
- 602: äußerer Mantel
- 604: innerer Mantel
- 606: Schraube
- 608: Gewindepaarung
- 610: Widerlager
- 612: Gewinde
- 702: Nut
- 704: Scheibe
- 706: Getriebekomponente
- 802: Schraube
- 804: Aussparung
- 1002: erster Teil
- 1004: zweiter Teil
- 1006: erster Isolator
- 1008: Spannvorrichtung
- 1010: zweiter Isolator
- 1012: dritter Isolator
- 1014: Grundplatte
- 1016: verschiebbare Platte
- 1018: Schraube
- 1019: Schraube
- 1020: Bolzen

## Patentansprüche

1. Baugruppe, zur Verwendung im Antriebsstrang einer Windkraftanlage,
mit einem Getriebe, einem Generator und einem Modul (128), wobei das Modul (128) eine Welle (108) oder eine Nabe (402), mindestens ein Lager (110) und eine Stützstruktur (112) aufweist, wobei
die Welle (108) des Moduls (128) oder die Nabe (402) mittels des Lagers (110) drehbar in der Stützstruktur (112) gelagert ist, wobei
die Welle (108) oder die Nabe (402) drehfest und lösbar mit einer Welle (102) des Getriebes verbunden ist, wobei
ein Rotor (118) des Generators lösbar an der Welle (108) des Moduls oder der Nabe (402) fixiert ist, wobei
die Stützstruktur (112) lösbar an einem Gehäuse (104, 124) des Getriebes oder des Generators fixiert ist, wobei
der Rotor (118) des Generators mittels mindestens einer entfernbaren Montagesicherung (202) ortsfest an dem Gehäuse (104, 124) des Getriebes oder des Generators fixiert werden kann, wobei
der Rotor (118) des Generators eine Aussparung aufweist, durch die das Modul (128) mindestens teilweise hindurchgeführt werden kann, und wobei das Modul (128) von der Baugruppe demontiert werden kann, wenn der Rotor (118) des Generators mittels der Montagesicherung (202) fixiert ist und an seinem Platz verweilt; **dadurch gekennzeichnet, dass**
das Modul (128) von der Baugruppe demontiert werden kann, während mindestens ein erster Teil des Gehäuses (124) des Generators an dem Gehäuse (104) des Getriebes fixiert ist.

2. Baugruppe nach Anspruch 1, **dadurch gekennzeichnet, dass** die Stützstruktur (112) an dem Gehäuse (104) des Getriebes fixiert werden kann, wobei mindestens ein erster Teil des Gehäuses des Generators (124) mindestens an der Stützstruktur (112) fixiert werden kann.

3. Baugruppe nach einem der vorhergehenden Ansprüche, **gekennzeichnet durch** mindestens eine weitere Aussparung (302, 502) in dem Rotor (118) des Generators, in einem ersten Zwischenstück (116) oder in der Nabe (402), wobei mindestens ein Fixierelement (114, 802) durch die weitere Aussparung (302, 502) eingebracht und/oder entfernt werden kann ist, wobei das Fixierelement (114, 802) dazu dient, die Stützstruktur (112) an dem Gehäuse (104, 124) des Getriebes oder des Generators zu fixieren und/oder das Gehäuse des Generators (124) an der Stützstruktur (112) zu fixieren, und wobei der Rotor (118) mit dem ersten Zwischenstück (116) verfügt werden kann, und wobei das erste Zwischenstück (116) mit der Welle (108) des Moduls (128) oder der Nabe (402) verfügt werden kann.

4. Baugruppe nach dem vorhergehenden Anspruch, **dadurch gekennzeichnet, dass** das erste Zwischenstück (116) und/oder ein zweites Zwischenstück (404) demontiert werden können, wobei
das zweite Zwischenstück (404) mit der Nabe (402) verfügt werden kann und ausgebildet ist, eine drehfeste Verbindung mit der Welle (102) des Getriebes einzugehen.

5. Baugruppe nach einem der vorhergehenden zwei Ansprüche, **dadurch gekennzeichnet, dass**
die Nabe (402) oder das erste Zwischenstück (116) einen ersten Teil (1002) und einen zweiten Teil (1004) aufweisen, wobei
der Rotor (118) mit dem ersten Teil (1002) verfügt werden kann, und wobei und ein oder mehrere Isolatoren (1006, 1010, 1012) ausgebildet sind, den ersten Teil (1002) gegenüber dem zweiten Teil (1004) elektrisch zu isolieren.

6. Baugruppe nach Anspruch 5, **dadurch gekennzeichnet, dass** ein erster Isolator (1006) ausgebildet ist, den ersten Teil (1002) in mindestens eine radiale Richtung gegenüber dem zweiten Teil (1004) abzustützen.

7. Baugruppe nach Anspruch 5 oder 6, **dadurch gekennzeichnet, dass** der zweite Teil (1004) ausgebildet ist, den ersten Teil (1002) zwischen einem zweiten Isolator (1010) und einem dritten Isolator (1012) zu verspannen.

8. Verfahren, um aus einer Baugruppe nach einem der Ansprüche 1 bis 7 das Modul (128) der Baugruppe zu entfernen, mit folgenden Schritten:
- Fixieren des Rotors (118) des Generators mittels der Montagesicherung (202);
- Lösen der Fixierung des Rotors (118) des Generators an der Welle (118) des Moduls (128) oder an der Nabe (402);
- Lösen der Fixierung der Stützstruktur (112) an dem Gehäuse (104, 124) des Getriebes oder des Generators; und
- Entfernen des Moduls (128).

## Claims

1. Assembly for use in the drive train of a wind turbine,
comprising a gearbox, a generator and a module (128), wherein the module (128) has a shaft (108) or a hub (402), at least one bearing (110) and a supporting structure (112),
wherein the shaft (108) of the module (128) or the hub (402) is rotatably mounted in the supporting structure (112) by means of the bearing (110),
wherein the shaft (108) or the hub (402) is co-rotationally and detachably connected to a shaft (102) of the gearbox,
wherein a rotor (118) of the generator is detachably fixed to the shaft (108) of the module or the hub (402), wherein the supporting structure (112) is detachably fixed to a housing (104, 124) of the gearbox or of the generator,
wherein the rotor (118) of the generator can be fixed in a stationary manner to the housing (104, 124) of the gearbox or of the generator by means of at least one removable mounting securing means (202),
wherein the rotor (118) of the generator has a cut-out, through which the module (128) can at least partly be led, and
wherein the module (128) can be disassembled from the assembly when the rotor (118) of the generator is fixed by means of the mounting securing means (202) and remains in its place;
**characterized in that** the module (128) can be disassembled from the assembly while at least a first part of the housing (124) of the generator is fixed to the housing (104) of the gearbox.

2. Assembly according to Claim 1, **characterized in that** the supporting structure (112) can be fixed to the housing (104) of the gearbox,
wherein at least a first part of the housing of the generator (124) can be fixed at least to the supporting structure (112).

3. Assembly according to one of the preceding claims, **characterized by** at least one further cut-out (302, 502) in the rotor (118) of the generator, in a first intermediate piece (116) or in the hub (402),
wherein at least one fixing element (114, 802) can be introduced and/or removed through the further cut-out (302, 502),
wherein the fixing element (114, 802) is used to fix the supporting structure (112) to the housing (104, 124) of the gearbox or of the generator and/or to fix the housing of the generator (124) to the supporting structure (112), and
wherein the rotor (118) can be joined to the first intermediate piece (116), and
wherein the first intermediate piece (116) can be joined to the shaft (108) of the module (128) or the hub (402).

4. Assembly according to the preceding claim, **characterized in that** the first intermediate piece (116) and/or a second intermediate piece (104) can be disassembled,
wherein the second intermediate piece (404) can be joined to the hub (402) and is designed to make a co-rotational connection to the shaft (102) of the gearbox.

5. Assembly according to one of the preceding two claims, **characterized in that**
the hub (402) or the first intermediate piece (116) has a first part (1002) and a second part (1004),
wherein the rotor (118) can be joined to the first part (1002), and
wherein one or more insulators (1006, 1010, 1012) are designed to insulate the first part (1002) electrically with respect to the second part (1004).

6. Assembly according to Claim 5, **characterized in that** the first insulator (1006) is designed to support the first part (1002) with respect to the second part (1004) in at least one radial direction.

7. Assembly according to Claim 5 or 6, **characterized in that** the second part (1004) is designed to clamp the first part (1002) between a second insulator (1010) and a third insulator (1012).

8. Method for removing the module (128) of the assembly from an assembly according to one of Claims 1 to 7, having the following steps:
- fixing the rotor (118) of the generator by means of the mounting securing means (202);
- detaching the fixing of the rotor (118) of the generator to the shaft (108) of the module (128) or to the hub (402);
- detaching the fixing of the supporting structure (112) to the housing (104, 124) of the gearbox or of the generator; and
- removing the module (128).

## Revendications

1. Ensemble, destiné à être utilisé dans la chaîne cinématique d'une éolienne,
comportant une transmission, un générateur et un module (128),
le module (128) présentant un arbre (108) ou un moyeu (402), au moins un palier (110) et une structure de support (112),
l'arbre (108) du module (128) ou le moyeu (402) étant monté rotatif dans la structure de support (112) au moyen du palier (110),
l'arbre (108) ou le moyeu (402) étant relié de manière solidaire en rotation et libérable à un arbre (102) de la transmission,
un rotor (118) du générateur étant fixé de manière libérable à l'arbre (108) du module ou au moyeu (402), la structure de support (112) étant fixée de manière libérable à un carter (104, 124) de la transmission ou du générateur,
le rotor (118) du générateur pouvant être fixé à demeure au carter (104, 124) de la transmission ou du générateur au moyen d'au moins une sécurité de montage (202) pouvant être retirée,
le rotor (118) du générateur présentant un évidement à travers lequel le module (128) peut être guidé au moins partiellement, et
le module (128) pouvant être démonté de l'ensemble lorsque le rotor (118) du générateur est fixé au moyen de la sécurité de montage (202) et reste à sa place ; **caractérisé en ce que**
le module (128) peut être démonté de l'ensemble, tandis qu'au moins une première partie du carter (124) du générateur est fixée au carter (104) de la transmission.

2. Ensemble selon la revendication 1, **caractérisé en ce que**
la structure de support (112) peut être fixée au carter (104) de la transmission,
au moins une première partie du carter du générateur (124) pouvant être fixée au moins à la structure de support (112).

3. Ensemble selon l'une des revendications précédentes, **caractérisé par**
au moins un autre évidement (302, 502) dans le rotor (118) du générateur, dans une première pièce intermédiaire (116) ou dans le moyeu (402),
au moins un élément de fixation (114, 802) pouvant être introduit et/ou retiré à travers l'autre évidement (302, 502),
l'élément de fixation (114, 802) servant à fixer la structure de support (112) au carter (104, 124) de la transmission ou du générateur et/ou à fixer le carter du générateur (124) à la structure de support (112), et
le rotor (118) pouvant être joint à la première pièce intermédiaire (116), et la première pièce intermédiaire (116) pouvant être jointe à l'arbre (108) du module (128) ou du moyeu (402) .

4. Ensemble selon la revendication précédente, **caractérisé en ce que**
la première pièce intermédiaire (116) et/ou une deuxième pièce intermédiaire (404) peuvent être démontées,
la deuxième pièce intermédiaire (404) pouvant être jointe au moyeu (402) et étant réalisée pour former une liaison solidaire en rotation avec l'arbre (102) de la transmission.

5. Ensemble selon l'une des deux revendications précédentes, **caractérisé en ce que**
le moyeu (402) ou la première pièce intermédiaire (116) présente une première partie (1002) et une deuxième partie (1004),
le rotor (118) pouvant être joint à la première partie (1002), et
un ou plusieurs isolateurs (1006, 1010, 1012) étant réalisés pour isoler électriquement la première partie (1002) par rapport à la deuxième partie (1004).

6. Ensemble selon la revendication 5, **caractérisé en ce**
**qu'**un premier isolateur (1006) est réalisé pour supporter la première partie (1002) dans au moins une direction radiale par rapport à la deuxième partie (1004).

7. Ensemble selon la revendication 5 ou 6, **caractérisé en ce que**
la deuxième partie (1004) est réalisée pour serrer la première partie (1002) entre un deuxième isolateur (1010) et un troisième isolateur (1012).

8. Procédé, pour retirer, d'un ensemble selon l'une des revendications 1 à 7, le module (128) de l'ensemble, comportant les étapes suivantes :
- fixation du rotor (118) du générateur au moyen de la sécurité de montage (202) ;
- libération de la fixation du rotor (118) du générateur à l'arbre (108) du module (128) ou au moyeu (402) ;
- libération de la fixation de la structure de support (112) au carter (104, 124) de la transmission ou du générateur ; et
- retrait du module (128).
